# EUROPEAN PATENT APPLICATION

(11) **EP 3 073 428 A1**
(43) Date of publication of application: **28.09.2016**
(21) Application number: 16162336.8
(22) Date of filing: 24.03.2016
(51) Int. Cl.: G06Q 10/10

(54) **SCHEDULED EVENT VENUE DECIDING METHOD, AND SERVER FOR IMPLEMENTING THE SAME**

(30) Priority: 27.03.2015 JP 2015067634
(71) Applicant: Gurunavi, Inc., Tokyo 100-0006 (JP)
(72) Inventor: KUNITAKE, Nobumichi, Chiyoda-ku, Tokyo 100-0006 (JP)
(74) Representative: D Young & Co LLP

(57) **Abstract**

A scheduled event venue deciding method implemented by a server and a server for implementing the same are provided. The method includes acquiring, from an organizer terminal or at least one of participant terminals, information about a selected candidate event venue, and storing the information in a storage unit in association with user identification information of a user who has made the selection, transmitting the candidate event venue information and a voting request to the organizer terminal or the participant terminals, acquiring vote information from the organizer terminal or the participant terminals, and deciding one of candidate event venues as a scheduled event venue based on the vote information (S201), and storing reward information in the storage unit in association with user identification information of a user who has selected a candidate event venue that is decided as the scheduled event venue (S203).

## Description

### BACKGROUND OF THE INVENTION

### 1. Field of the Invention

The invention relates to a scheduled event venue deciding method, and a server for implementing the same.

### 2. Description of Related Art

Conventionally, only an organizer of an event in which a plurality of users are to participate selects several candidate event venues where the event is to be held, and decides a scheduled event venue where the event is to be held from the selected candidate event venues.

For example, Japanese Patent Application Publication No. 2005-107786 proposes an event arrangement support system according to which a group representative user selects trip conditions such as a destination and date of departure, extracts tours matching the trip conditions, and decides a tour that matches the image of the trip and that is to be used at the time of arrangement of the trip.

Also, Japanese Patent Application Publication No. 2006-323805 proposes a party reservation support system according to which an organizer inputs the number of participants, the type of food, the area of the restaurant, and the like as conditions for a party to be held, searches for restaurants satisfying these conditions, and registers candidate restaurants obtained by the search.

### SUMMARY OF THE INVENTION

However, it is very burdensome for an organizer to select candidate event venues and decide a scheduled event venue by himself/herself.

Accordingly, an object of the present application is to provide a scheduled event venue deciding method for giving not only an organizer but also a user who is to participate in an event a chance to select a candidate event venue, and a server for implementing the method.

A first aspect of the present invention relates to a scheduled event venue deciding method implemented by a server that includes storage means for storing user identification information and that is capable of communicating with an organizer terminal of an organizer of an event and participant terminals of a plurality of participants who are to participate in the event. The scheduled event venue deciding method includes the steps of: transmitting, according to upcoming event information from the organizer terminal, a candidate event venue addition request to the participant terminals; acquiring, from the organizer terminal or at least one of the participant terminals, candidate event venue information about a selected candidate event venue, and storing the candidate event venue information in the storage means in association with user identification information of a user of the organizer terminal or the participant terminal who has selected the candidate event venue; transmitting the candidate event venue information and a voting request to the organizer terminal or the participant terminals; acquiring vote information from the organizer terminal or the participant terminals, and deciding one of selected candidate event venues as a scheduled event venue based on the vote information; and storing reward information in the storage means in association with user identification information of a user who has selected a candidate event venue that is decided as the scheduled event venue.

According to the scheduled event venue deciding method described above, by providing an incentive to a user who selected a candidate event venue which is finally decided as the scheduled event venue, it is possible to cause a user who is to participate in an event to become actively involved in selection of the candidate event venue.

According to the first aspect of the present invention, an upper limit may be set to the number of candidate event venues that a user of the organizer terminal or one of the participant terminals is allowed to select.

According to the first aspect of the present invention, an upper limit may be set to a total of the number of candidate event venues that users of all of the organizer terminal and the participant terminals are allowed to select.

According to the first aspect of the present invention, the method may further include a step of transmitting the candidate event venue addition request to only a participant terminal from which the vote information has been acquired.

According to the first aspect of the present invention, the method may further include a step of notifying a terminal of the scheduled event venue about a contact of the user who has selected the candidate event venue that is decided as the scheduled event venue.

According to the first aspect of the present invention, the method may further include the steps of: varying the reward information based on the vote information; and storing the reward information that has been varied in the storage means in association with the user identification information of the user who has selected the candidate event venue that is decided as the scheduled event venue.

A second aspect of the present invention relates to a server that is capable of communicating with an organizer terminal of an organizer of an event and participant terminals of a plurality of participants who are to participate in the event. The server includes: communication means for carrying out communication with the organizer terminal or the participant terminals, the communication means including a communication interface circuit for transmitting/receiving data; processing means for integrally controlling the overall operation of the server; and storage means for storing data used for processing in the processing means, the storage means storing user identification information. The processing means transmits, according to upcoming event information from the organizer terminal, a candidate event venue addition request to the participant terminals via the communication means. The processing means acquires, from the organizer terminal or at least one of the participant terminals via the communication means, candidate event venue information about a selected candidate event venue, and stores the candidate event venue information in the storage means in association with user identification information of a user of the organizer terminal or the participant terminal who has selected the candidate event venue. The processing means transmits the candidate event venue information and a voting request to at least the organizer terminal or the participant terminals via the communication means. The processing means acquires vote information from at least the organizer terminal or the participant terminals, and decides one of selected candidate event venues as a scheduled event venue based on the vote information. The processing means stores reward information in the storage means in association with user identification information of a user who has selected a candidate event venue that is decided as the scheduled event venue.

According to the second aspect of the present invention, the processing means may include: coordination means for coordinating, between the organizer terminal/participant terminals and the server, which venue of a plurality of venues is to be selected by users as a candidate event venue, and what ratings, about a selected candidate event venue, the users are to vote for; vote management means for acquiring vote information about a plurality of candidate event venues from at least the organizer terminal or the participant terminals, and for deciding a scheduled event venue from the plurality of candidate event venues based on a result of counting the vote information; reward management means for giving a predetermined reward to a user who has selected a candidate event venue that is decided as the scheduled event venue; and contact notification means for transmitting information about the user who has selected the candidate event venue that is decided as the scheduled event venue and information about the event to a terminal of the decided scheduled event venue.

According to the second aspect of the present invention, an upper limit may be set to the number of candidate event venues that a user of the organizer terminal or one of the participant terminals is allowed to select.

According to the second aspect of the present invention, an upper limit may be set to a total of the number of candidate event venues that users of all of the organizer terminal and the participant terminals are allowed to select.

According to the second aspect of the present invention, the processing means may transmit, via the communication means, the candidate event venue addition request to only a participant terminal from which the vote information has been acquired.

According to the second aspect of the present invention, the processing means may notify a terminal of the scheduled event venue about a contact of the user who has selected the candidate event venue that is decided as the scheduled event venue.

According to the second aspect of the present invention, the processing means may vary the reward information based on the vote information, and store the reward information that has been varied in the storage means in association with the user identification information of the user who has selected the candidate event venue that is decided as the scheduled event venue.

All of the general descriptions and the detailed descriptions are provided for illustrative and descriptive purposes only, and it should be understood that, unlike the accompanying claims, these descriptions do not restrict the present invention.

The objects and effects of the present invention would be recognized and comprehended by using the structural elements and any combination thereof identified especially in the accompanying claims. The general descriptions and the detailed descriptions are provided for illustrative and descriptive purposes only and thus do not restrict the present invention described in the claims.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is an example schematic configuration illustrating a scheduled event venue deciding system 1;
FIG. 2A is a diagram illustrating an example schematic configuration of an organizer terminal 2;
FIG. 2B is a diagram illustrating an example schematic configuration of a mobile terminal 3;
FIG. 3 is a diagram illustrating an example schematic configuration of a server 4;
FIG. 4A is a diagram illustrating an example data structure of a venue management table;
FIG. 4B is a diagram illustrating an example data structure of an event management table;
FIG. 4C is a diagram illustrating an example data structure of a candidate event venue management table;
FIG. 5 is a diagram illustrating an example operation sequence of the scheduled event venue deciding system 1;
FIG. 6 is a diagram illustrating an example flow chart of a scheduled event venue deciding process by the server 4;
FIG. 7A is a diagram illustrating an example input screen on the organizer terminal 2 for upcoming event information in the form of exchange of messages;
FIG. 7B is a diagram illustrating an example search screen on the organizer terminal 2;
FIG. 7C is a diagram illustrating an example screen displayed on a display unit 24 of the organizer terminal 2 illustrating a search result for a venue that can be reserved;
FIG. 7D is a diagram illustrating an example event transmission screen on the organizer terminal 2;
FIG. 8A is a diagram illustrating an example screen displaying a candidate event venue addition request on a display unit 34 of the mobile terminal 3;
FIG. 8B is a diagram illustrating an example screen displaying a website of a user who is to participate in an event "social gathering" on the display unit 34 of the mobile terminal 3;
FIG. 8C is a diagram illustrating an example search screen on the mobile terminal 3;
FIG. 8D is a diagram illustrating an example screen displaying a search result for a venue that can be reserved on the display unit 34 of the mobile terminal 3;
FIG. 9A is a diagram illustrating an example screen displaying a voting request on the display unit 34 of the mobile terminal 3;
FIG. 9B is a diagram illustrating an example vote screen on the mobile terminal 3;
FIG. 10A is a diagram illustrating an example screen displaying a notice to the effect that a scheduled event venue has been decided on the display unit 34 of the mobile terminal 3;
FIG. 10B is a diagram illustrating an example screen displaying reward information on the display unit 34 of the mobile terminal 3;
FIG. 11A is a diagram illustrating an example screen displaying a revoting request on the display unit 34 of the mobile terminal 3; and
FIG. 11B is a diagram illustrating an example revote screen on the mobile terminal 3.

### DETAILED DESCRIPTION OF EMBODIMENTS

### [First Embodiment]

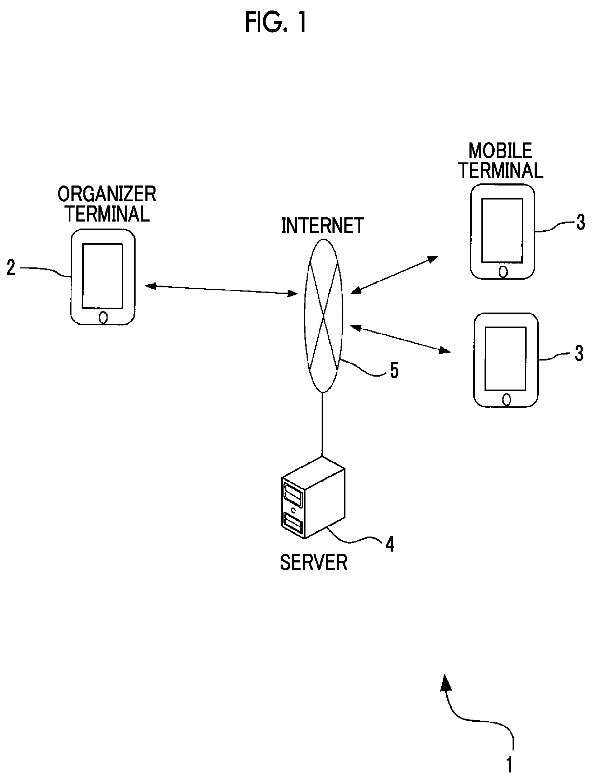

FIG. 1 is a diagram illustrating an example schematic configuration of a scheduled event venue deciding system 1.

The scheduled event venue deciding system 1 includes at least one organizer terminal 2, a plurality of mobile terminals 3, and a server 4. The organizer terminal 2 and the server 4 are connected to each other via a communication network, such as the Internet 5. A program executed on the organizer terminal 2 and a program executed on the server 4 communicate using a communication protocol such as the Hypertext Transfer Protocol (HTTP). The mobile terminal 3 and the server 4 are connected to each other via a communication network, such as the Internet 5. A program executed on the mobile terminal 3 and a program executed on the server 4 communicate using a communication protocol such as the Hypertext Transfer Protocol (HTTP).

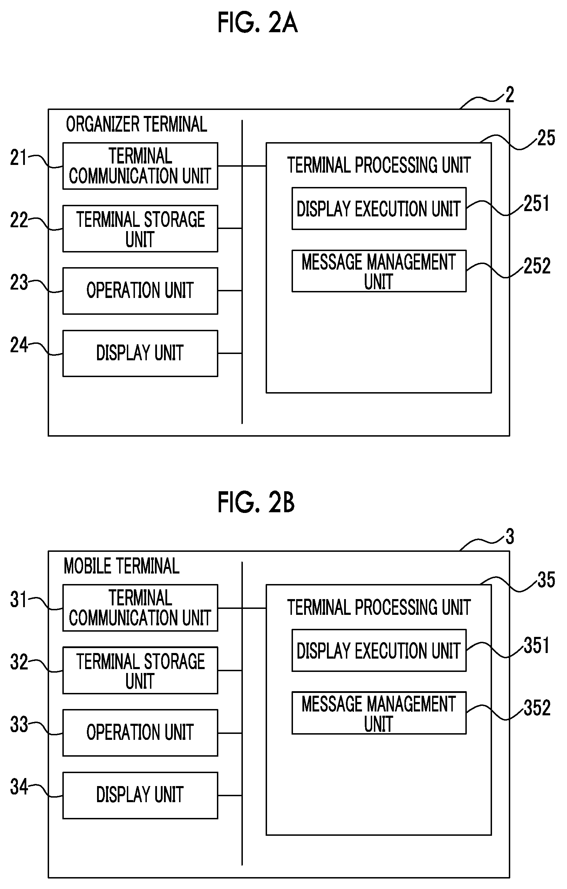

FIG. 2A is a diagram illustrating an example schematic configuration of the organizer terminal 2.

The organizer terminal 2 includes, for example, a terminal communication unit 21, a terminal storage unit 22, an operation unit 23, a display unit 24, and a terminal processing unit 25. An organizer means a user who is in charge of organizing an event in which a plurality of users are to participate. Events are held at venues. Examples of an event include a company trip, a new year's party, a year-end party, a barbecue, a party, a social gathering, a class reunion, and a golf competition. Examples of a venue include a hotel, a Japanese-style hotel, a store, a restaurant, a banquet hall, and a golf course. The organizer terminal 2 is assumed to be, but not limited to, a multi-functional mobile phone (a so-called "smartphone"). The organizer terminal 2 may be anything, including a mobile phone (a so-called "feature phone"), a mobile information terminal (Personal Digital Assistant, PDA), a tablet PC, and a personal computer (PC), as long as the present invention can be applied thereto.

The terminal communication unit 21 includes a communication interface circuit with an antenna having a predetermined frequency bandwidth as a receiving bandwidth, and connects the organizer terminal 2 to the Internet 5. The terminal communication unit 21 transmits data supplied from the terminal processing unit 25 to the server 4 and others. The terminal communication unit 21 also supplies data received from the server 4 and other to the terminal processing unit 25.

The terminal storage unit 22 includes at least one of a semiconductor memory, a magnetic disk device, and an optical disk device, for example. The terminal storage unit 22 stores an operating system program, driver programs, application programs, data, and the like used for processing in the terminal processing unit 25. For example, the terminal storage unit 22 stores an input device driver program for controlling the operation unit 23, an output device driver program for controlling the display unit 24, and the like as the driver programs. Also, the terminal storage unit 22 stores a program for carrying out transmission/reception of messages, and the like as the application programs. Furthermore, the terminal storage unit 22 stores a transmission/reception message and data associated with the message as the data. Furthermore, the terminal storage unit 22 may temporarily store data related to predetermined processing.

The operation unit 23 may be any device, such as a touch pad and a keyboard, as long as the device is capable of operating the organizer terminal 2. An organizer is allowed to input letters, numbers and the like by using the operation unit 23. When operated by the organizer, the operation unit 23 generates a signal corresponding to the operation. The generated signal is then supplied to the terminal processing unit 25 as an instruction from the organizer.

The display unit 24 may be any device, such as a liquid crystal display and an organic EL (Electro-Luminescence) display, as long as the device is capable of displaying text, image, and the like. The display unit 24 displays, for example, a transmission/reception message supplied by the terminal processing unit 25.

The terminal processing unit 25 includes one or more processors, and peripheral circuit(s) of the processor(s). The terminal processing unit 25 integrally controls the overall operation of the organizer terminal 2, and is a CPU (Central Processing Unit), for example. The terminal processing unit 25 controls operations of the terminal communication unit 21, the display unit 24, and others so that programs stored in the terminal storage unit 22 are executed by an appropriate procedure according to an operation of the operation unit 23, for example. The terminal processing unit 25 carries out processing based on programs (such as an operating system program, driver programs, and application programs) stored in the terminal storage unit 22. Moreover, the terminal processing unit 25 can execute a plurality of programs (such as application programs) in parallel.

The terminal processing unit 25 includes a display execution unit 251, and a message management unit 252. Each of these units is a function module achieved by a program executed in a processor provided to the terminal processing unit 25. Alternatively, each of these units may be implemented in the organizer terminal 2 as firmware.

The display execution unit 251 carries out acquisition and display of display data regarding decision of a venue. That is, according to an instruction from a user, the display execution unit 251 transmits input, selection or the like regarding decision of a venue to the server 4 via the terminal communication unit 21. Also, the display execution unit 251 receives display data corresponding to a processing result of input, selection or the like regarding decision of a venue from the server 4 via the terminal communication unit 21. The display execution unit 251 carries out display on the display unit 24 based on the received display data.

The message management unit 252 carries out transmission/reception of messages via the terminal communication unit 21.

FIG. 2B is a diagram illustrating an example schematic configuration of the mobile terminal 3.

The mobile terminal 3 is an example of a participant terminal, and includes, for example, a terminal communication unit 31, a terminal storage unit 32, an operation unit 33, a display unit 34, and a terminal processing unit 35. The mobile terminal 3 is a terminal of a user who is to participate in an event. The mobile terminal 3 is assumed to be, but not limited to, a multi-functional mobile phone (a so-called "smartphone"). The mobile terminal 3 may be anything, including a mobile phone (a so-called "feature phone"), a mobile information terminal (Personal Digital Assistant, PDA), a tablet PC, and a personal computer (PC), as long as the present invention can be applied thereto.

The terminal communication unit 31, the terminal storage unit 32, the operation unit 33, the display unit 34, and the terminal processing unit 35 included in the mobile terminal 3 are respectively similar to the terminal communication unit 21, the terminal storage unit 22, the operation unit 23, the display unit 24, and the terminal processing unit 25 included in the organizer terminal 2, and thus will not be described herein.

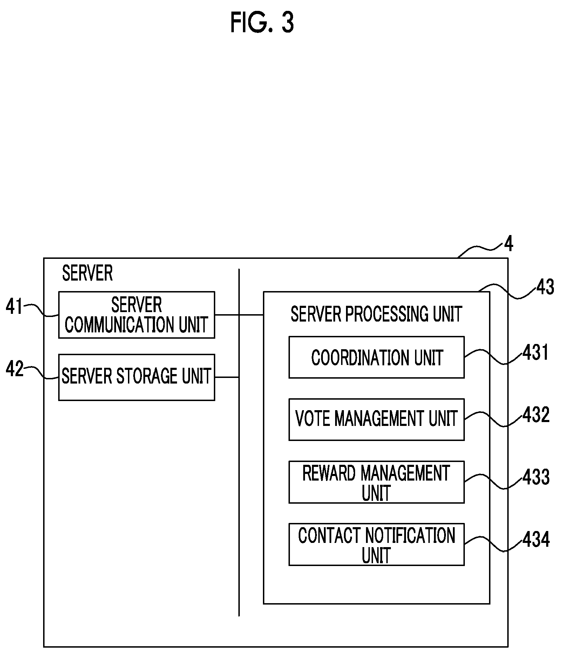

FIG. 3 is a diagram illustrating an example schematic configuration of the server 4.

The server 4 is an example of a device according to the present application, and includes a server communication unit 41, a server storage unit 42, and a server processing unit 43.

The server communication unit 41 is an example of communication means, and includes a communication interface circuit for transmitting/receiving data over the Internet 5, and carries out communication between the organizer terminal 2 and the server 4, and between the mobile terminal 3 and the server 4.

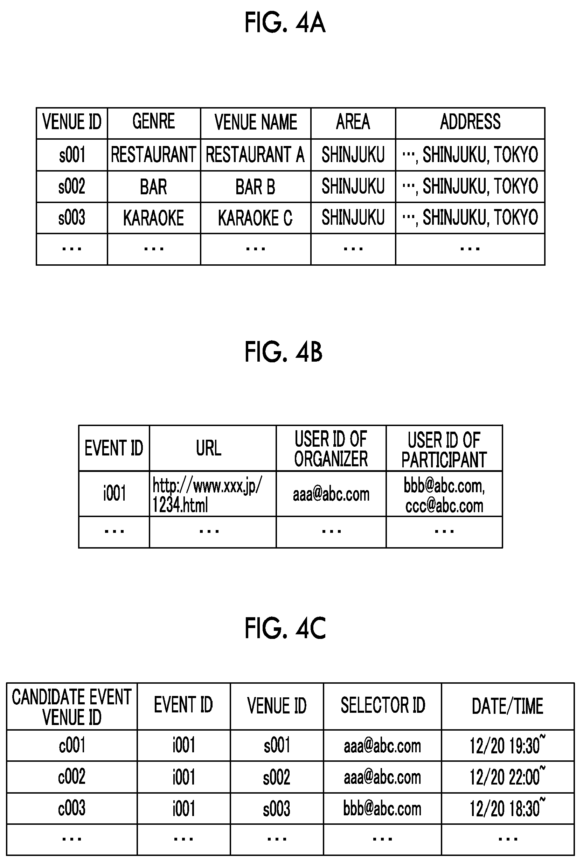

The server storage unit 42 is an example of storage means, and includes at least one of a magnetic tape device, a magnetic disk device, and an optical disk device, for example, and stores an operating system program, driver programs, application programs, data and the like used for processing in the server processing unit 43. Also, the server storage unit 42 stores a venue management table (FIG. 4A), an event management table (FIG. 4B), and a candidate event venue management table (FIG. 4C) as the data. The server storage unit 42 stores reward information in association with user identification information of a user who has a reward. Also, the server storage unit 42 stores vote information in association with user identification information of a user who has cast a vote. Moreover, the server storage unit 42 stores names and contacts of an organizer and a plurality of users. Moreover, the server storage unit 42 further includes a buffer for temporarily storing data related to predetermined processing.

The server processing unit 43 is an example of processing means, and includes one or more processors, and peripheral circuit(s) of the processor(s). The server processing unit 43 integrally controls the overall operation of the server 4, and includes a CPU, for example. Also, the server processing unit 43 controls operations of the server communication unit 41 and others according to appropriate procedures based on programs (such as an operating system program, driver programs and application programs) stored in the server storage unit 42. Furthermore, the server processing unit 43 may execute a plurality of programs (such as application programs) in parallel.

The server processing unit 43 includes, for example, a coordination unit 431, a vote management unit 432, a reward management unit 433, and a contact notification unit 434. These are function modules achieved by programs executed in a processor provided to the server processing unit 43. These function modules may be implemented in the server 4 as firmware.

The coordination unit 431 is an example of coordination means, and coordinates, between the organizer terminal 2/mobile terminals 3 and the server 4, which venue of a plurality of venues is to be selected as a candidate event venue by users and what ratings, about the selected candidate event venue, the users are to vote for. Coordination between the organizer terminal 2/mobile terminals 3 and the server 4 will be described later.

The vote management unit 432 is an example of vote management means, and acquires vote information about a plurality of candidate event venues from the organizer terminal 2 and/or a plurality of mobile terminals 3, and decides a scheduled event venue from a plurality of candidate event venues based on the result of counting the vote information. Decision of a scheduled event venue from a plurality of candidate event venues based on a result of counting vote information will be described later.

The reward management unit 433 is an example of reward management means, and gives a predetermined reward to a user who selected the candidate event venue which is decided as the scheduled event venue. Giving of a reward will be described later.

FIG. 4A is a diagram illustrating an example data structure of the venue management table.

The data structure illustrated in FIG. 4A shows a set of data items associated with a venue ID stored in the server storage unit 42. The set of data items includes, for example, a genre, a venue name, an area, and an address. The set of data items is an example and may include other pieces of information about a candidate event venue. A genre means the field of products or services offered by a venue. An area means a district where the address of a venue belongs.

FIG. 4B is a diagram illustrating an example data structure of the event management table.

The data structure illustrated in FIG. 4B shows a set of data items associated with an event ID stored in the server storage unit 42. The set of data items includes, for example, an URL, a user ID of an organizer of the event, and a user ID of a user who is to participate in the event. These are only examples, and the set of data items associated with an event ID may also include other pieces of information about the event. An URL is an URL used to access a website for casting a vote for a candidate event venue and for selecting a candidate event venue. For example, a website for selecting a candidate event venue is stored in the server storage unit 42 of the server 4.

FIG. 4C is a diagram illustrating an example data structure of the candidate event venue management table.

The data structure illustrated in FIG. 4C shows a set of data items associated with a candidate event venue ID stored in the server storage unit 42. The set of data items includes, for example, an event ID, a venue ID, a selector ID, and data/time. These are only examples, and the set of data items associated with a candidate event venue ID may also include other pieces of information about the candidate event venue. A venue ID is identification information of a venue selected as a candidate event venue. A selector ID is identification information of a user who has selected a candidate event venue.

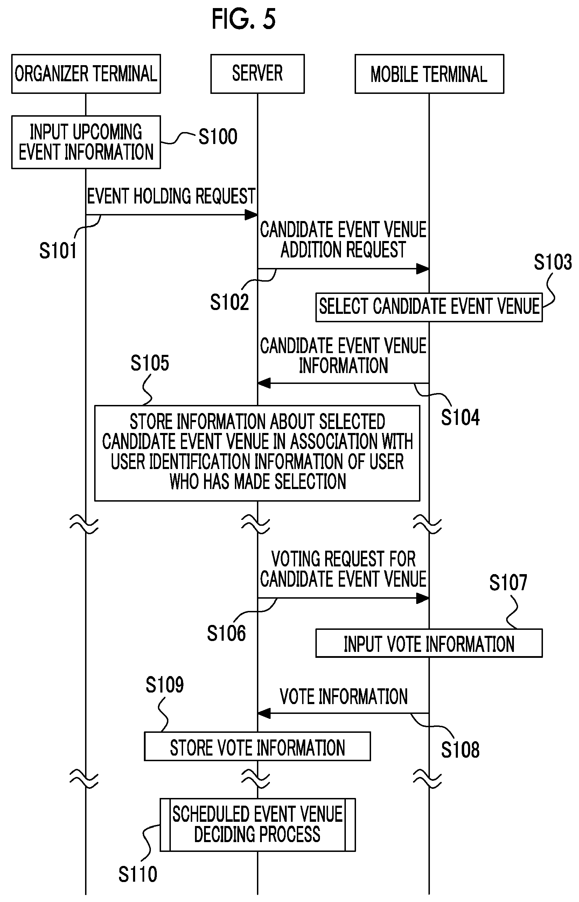

FIG. 5 is a diagram illustrating an example operation sequence of the scheduled event venue deciding system 1.

An operation sequence described below is mainly carried out by the terminal processing unit 25, the terminal processing unit 35, and the server processing unit 43, in cooperation with each component of the organizer terminal 2, the mobile terminal 3, and the server 4, based on programs stored in advance in the terminal storage unit 22, the terminal storage unit 32, and the server storage unit 42.

First, the display execution unit 251 of the organizer terminal 2 causes an organizer to select a candidate event venue (step S100).

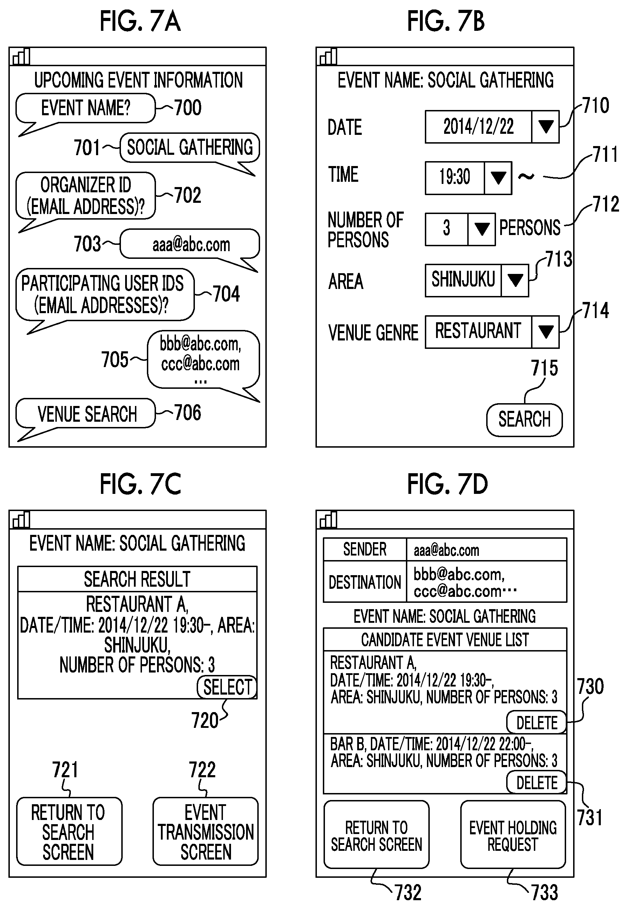

FIGS. 7A to 7D are diagrams illustrating example screens on the organizer terminal 2 for allowing the organizer to input upcoming event information described with reference to step S100 in FIG. 5.

FIG. 7A is a diagram illustrating an example input screen on the organizer terminal 2 for upcoming event information in the form of exchange of messages.

In FIG. 7A, first, the message management unit 252 of the organizer terminal 2 displays a message 700, i.e. "event name?". Next, the message management unit 252 displays a message 701, i.e. "social gathering", input by operation of the operation unit 23 by the organizer. Next, the message management unit 252 displays a message 702, i.e. "organizer ID (email address)?". Next, the message management unit 252 displays a message 703, i.e. "aaa@abc.com", input by operation of the operation unit 23 by the organizer. Then, the message management unit 252 displays a message 704, i.e. "participating user ID (email address)?". Next, the message management unit 252 displays a message 705, i.e. "bbb@abc.com, ccc@abc.com...", input by operation of the operation unit 23 by the organizer. Furthermore, a "venue search" button 706 is displayed. Pieces of information input as the messages 701, 703, 705 are upcoming event information. Stress felt by the organizer due to burdensome input may be alleviated by alternate performance of display of inquiry messages 700, 702, 704 by the message management unit 252 and input of upcoming event information by the organizer.

When the organizer presses the "venue search" button 706, the message management unit 252 transmits pieces of upcoming event information input as the messages 701, 703, 705 to the server 4 via the terminal communication unit 21, and the display execution unit 251 displays a search screen on the display unit 24.

When the upcoming event information is acquired via the server communication unit 41, the coordination unit 431 of the server 4 stores the upcoming event information in the event management table.

FIG. 7B is a diagram illustrating an example search screen on the organizer terminal 2.

In FIG. 7B, "2014/12/22" is displayed in an input form 710 as the date. As the time, "19:30" is displayed in an input form 711. As the number of persons, "3" persons is displayed in an input form 712. As the area, "Shinjuku" is displayed in an input form 713. As the genre of the venue, "restaurant" is displayed in an input form 714. These "2014/12/22", "19:30", "3" persons, "Shinjuku", and "restaurant" displayed in the input forms 710 to 714 are pieces of information input by operation of the operation unit 23 by the organizer. Moreover, a search button 715 is displayed. When the organizer presses the search button 715, the display execution unit 251 transmits the input search conditions, namely, "2014/12/22", "19:30", "Shinjuku", "3" persons, and "restaurant", to the server 4 via the terminal communication unit 21.

When the search conditions are acquired from the organizer terminal 2 via the server communication unit 41, a search unit (not shown) of the server 4 searches for a venue based on the search conditions, and transmits, to the organizer terminal 2 via the server communication unit 41, a search result for a venue that can be reserved.

When a search result for a venue that can be reserved is acquired from the server 4 via the terminal communication unit 21, the display execution unit 251 of the organizer terminal 2 displays the search result for a venue that can be reserved on the display unit 24.

FIG. 7C is a diagram illustrating an example screen displayed on the display unit 24 of the organizer terminal 2 illustrating a search result for a venue that can be reserved.

In FIG. 7C, "restaurant A, date/time: 2014/12/22 19:30-, area: Shinjuku, number of persons: 3" is displayed as a search result for a venue that can be reserved. Also, a select button 720, a "return to search screen" button 721, and an event transmission screen button 722 are displayed. When the organizer presses the select button 720, the display execution unit 251 transmits, to the server 4 via the terminal communication unit 21, candidate event venue information about selection of a venue corresponding to the select button 720 (for example, the restaurant A) from the search result for a venue that can be reserved.

When the candidate event venue information is acquired from the organizer terminal 2 via the server communication unit 41, the coordination unit 431 of the server 4 stores the candidate event venue information in the candidate event venue management table, and updates various pieces of information about the candidate event venue. For example, the coordination unit 431 of the server 4 stores, in the candidate event venue management table, as the selector ID, the user ID of the organizer, who has selected the candidate event venue.

When the organizer presses the "return to search screen" button 721, the display execution unit 251 redisplays the search screen in FIG. 7B on the display unit 24.

When the organizer presses the event transmission screen button 722, the display execution unit 251 displays the event transmission screen in FIG. 7D to the display unit 24.

FIG. 7D is a diagram illustrating an example event transmission screen on the organizer terminal 2.

In FIG. 7D, "aaa@abc.com", which is the email address of the organizer, is displayed as the sender. Also, "bbb@abc.com, ccc@abc.com...", which are the email addresses of users who are to participate in the event, are displayed as the destinations. In the section of a candidate event venue list, "restaurant A, date/time: 2014/12/22 19:30-, area: Shinjuku, number of persons: 3" and "bar B, date/time: 2014/12/22 22:00-, area: Shinjuku, number of persons: 3" selected by the organizer as the candidate event venues are displayed. The candidate event venue list is an example of the candidate event venue information about the candidate event venue(s) selected by the organizer. Moreover, delete buttons 730, 731, a "return to search screen" button 732, and an event holding request button 733 are displayed. The "return to search screen" button 732 is similar to the "return to search screen" button 721 in FIG. 7C, and thus will not be described herein.

When organizer presses the delete button 730 or the delete button 731, the display execution unit 251 transmits, to the server 4 via the terminal communication unit 21, delete information about deletion of venues corresponding to the delete buttons 730, 731, among the candidate event venues in the section of the candidate event venue list, from the candidate event venues.

When the delete information for a candidate event venue is acquired from the organizer terminal 2 via the server communication unit 41, the coordination unit 431 of the server 4 deletes various pieces of information about the candidate event venue corresponding to the delete information from the candidate event venue management table.

On the other hand, when the organizer presses the event holding request button 733, the display execution unit 251 transmits, to the server 4 via the terminal communication unit 21, the destinations "bbb@abc.com, ccc@abc.com..." and an event holding request (step S101).

When the event holding request is acquired from the organizer terminal 2 via the server communication unit 41, the coordination unit 431 transmits, to each mobile terminal 3 of the destinations "bbb@abc.com, ccc@abc.com..." via the server communication unit 41, a candidate event venue addition request, together with the candidate event venue information about the selected candidate event venue (step S102). Addition of a candidate event venue here is selection and addition of a candidate event venue.

When the candidate event venue information and the candidate event venue addition request are acquired from the server 4 via the terminal communication unit 31, a message management unit 352 of the mobile terminal 3 displays the candidate event venue information and the candidate event venue addition request on the display unit 34.

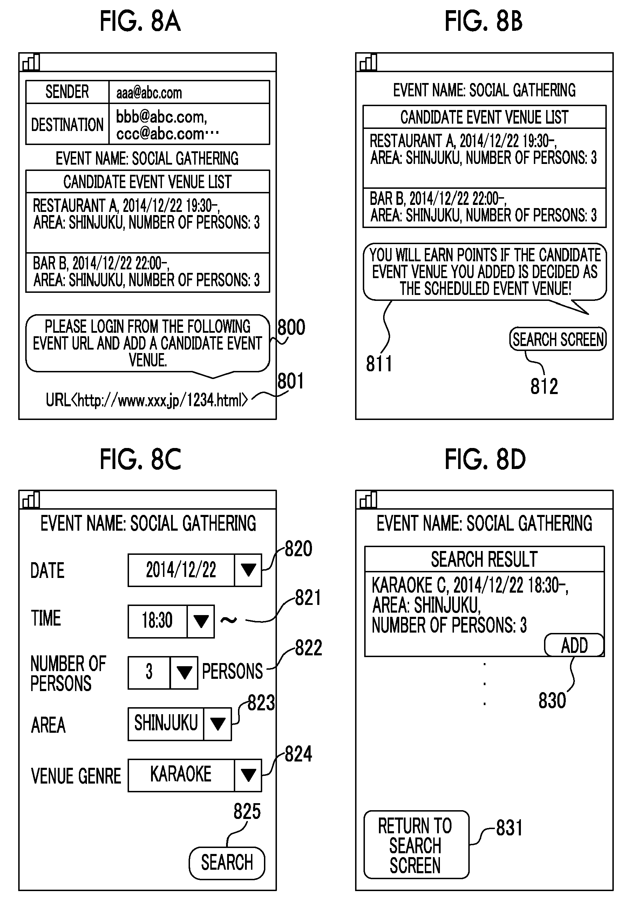

FIG. 8A is a diagram illustrating an example screen displaying a candidate event venue addition request on the display unit 34 of the mobile terminal 3.

In FIG. 8A, "aaa@abc.com", which is the email address of the organizer, is displayed as the sender. Also, "bbb@abc.com, ccc@abc.com...", which are the email addresses of users who are to participate in the event, are displayed as the destinations. In the section of the candidate event venue list, "restaurant A, date/time: 2014/12/22 19:30-, area: Shinjuku, number of persons: 3" and "bar B, date/time: 2014/12/22 22:00-, area: Shinjuku, number of persons: 3" selected by the organizer as the candidate event venues are displayed. The candidate event venue list is an example of the candidate event venue information. Moreover, a message 800, i.e. "Please log in from the following event URL and add a candidate event venue", and "URL<http://www.xxx.jp/1234.html>" 801, which is the event URL, are displayed.

When a user of the mobile terminal 3 operates the operation unit 33, a display execution unit 351 of the mobile terminal 3 accesses the event URL, and transmits a login request including the user ID and a password to the server 4 via the terminal communication unit 31.

When the login request is acquired from the mobile terminal 3 via the server communication unit 41, the coordination unit 431 of the server 4 authenticates the acquired login request, and transmits information of the website of the user, who is to participate in the event "social gathering", to the mobile terminal 3 via the server communication unit 41.

When the information on the website of the user, who is to participate in the event "social gathering", is acquired from the server 4 via the terminal communication unit 31, the display execution unit 351 displays the website of the user, who is to participate in the event "social gathering", on the display unit 34.

FIG. 8B is a diagram illustrating an example screen displaying the website of the user, who is to participate in the event "social gathering", on the display unit 34 of the mobile terminal 3.

In FIG. 8B, a message 811, i.e. "You will earn points if the candidate event venue you added is decided as the scheduled venue!", and a search screen button 812 are displayed.

When the user presses the search screen button 812 in FIG. 8B, the display execution unit 351 causes the user to select a candidate event venue (step S103). The display execution unit 351 transmits the candidate event venue information about the candidate event venue selected by the user to the server 4 via the terminal communication unit 31 (step S104).

FIGS. 8C and 8D are diagrams illustrating example screens, on the mobile terminal 3, for selection of a candidate event venue, described with reference to steps S103, S104 in FIG. 5.

FIG. 8C is a diagram illustrating an example search screen on the mobile terminal 3.

The search screen on the mobile terminal 3 in FIG. 8C is similar to the search screen on the organizer terminal 2 in FIG. 7B, and thus will not be described herein. In FIG. 8C, "2014/12/22", "18:30", "3" persons, "Shinjuku", and "karaoke" displayed in input forms 820 to 824 are pieces of information input by operation of the operation unit 33 by the user. Moreover, when the user presses a search button 825, the display execution unit 351 transmits the input search conditions, namely, "2014/12/22", "18:30", "3" persons, "Shinjuku", and "karaoke", to the server 4 via the terminal communication unit 31.

When the search conditions are acquired via the server communication unit 41, the search unit (not shown) of the server 4 searches for a venue that can be reserved, based on the search conditions, and transmits, to the mobile terminal 3 via the server communication unit 41, a search result for a venue that can be reserved.

When a search result for a venue that can be reserved is acquired from the server 4 via the terminal communication unit 31, the display execution unit 351 of the mobile terminal 3 displays the search result for a venue that can be reserved on the display unit 34.

FIG. 8D is a diagram illustrating an example screen displaying a search result for a venue that can be reserved on the display unit 34 of the mobile terminal 3.

The screen in FIG. 8D displaying a search result for a venue that can be reserved on the display unit 34 of the mobile terminal 3 is similar to the screen in FIG. 7C displaying a search result for a venue that can be reserved on the display unit 24 of the organizer terminal 2, and thus will not be described herein. When the user presses an add button 830, the display execution unit 351 transmits, to the server 4 via the terminal communication unit 31, candidate event venue information about selection of a venue corresponding to the add button 830 (for example, karaoke C), in the search result for a venue that can be reserved, as a candidate event venue.

Returning to FIG. 5, when the candidate event venue information is acquired via the server communication unit 41, the coordination unit 431 of the server 4 stores the candidate event venue information about the selected candidate event venue in the candidate event venue management table in association with the user identification information of the user who has made the selection (step S105).

Specifically, first, the coordination unit 431 of the server 4 acquires, via the server communication unit 41, the candidate event venue information about the selected candidate event venue. Then, the coordination unit 431 of the server 4 refers to the candidate event venue management table, and determines whether the selected venue is included in the candidate event venue(s) already selected, based on whether the venue ID of the selected candidate event venue matches the venue ID of a candidate event venue already stored in the candidate event venue management table.

In the case where the venue ID of the selected venue matches the venue ID of a candidate event venue already stored, the selected venue is already included in the candidate event venue(s), and the coordination unit 431 of the server 4 returns an error message (not shown) to the mobile terminal 3 via the server communication unit 41.

On the other hand, in the case where the venue ID of the selected venue does not match the venue ID of a candidate event venue already stored, the coordination unit 431 of the server 4 stores the candidate event venue information about the selected candidate event venue in the candidate event venue management table in association with the user identification information of the user who has made the selection. That is, the coordination unit 431 of the server 4 stores the candidate event venue information in the candidate event venue management table, and updates various pieces of information about the selected candidate event venue. Here, the coordination unit 431 of the server 4 stores, in the candidate event venue management table, as a selector ID, the user ID of the user who has selected the candidate event venue.

When a predetermined selection period for a candidate event venue is over, and a predetermined voting period for a candidate event venue is reached, the coordination unit 431 of the server 4 transmits a voting request for a candidate event venue together with pieces of candidate event venue information about the selected candidate event venues, to the mobile terminals 3 of a plurality of users who are to participate in the event, via the server communication unit 41 (step S106). Additionally, the predetermined selection period for a candidate event venue and the predetermined voting period for a candidate event venue may be made changeable from the organizer terminal 2.

When pieces of candidate event venue information about selected candidate event venues and the voting request are acquired via the terminal communication unit 31, the message management unit 352 of the mobile terminal 3 displays the pieces of candidate event venue information and the voting request on the display unit 34.

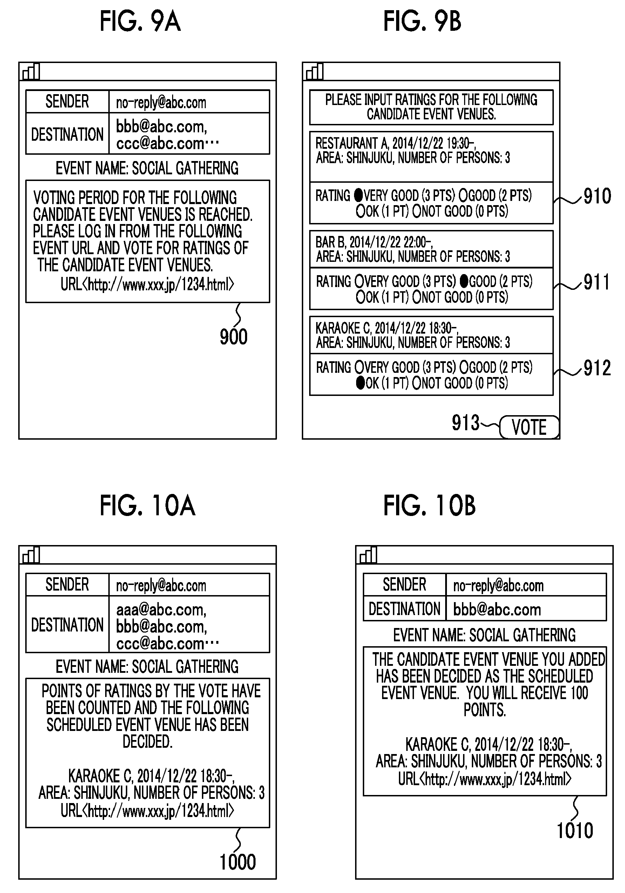

FIG. 9A is a diagram illustrating an example screen displaying the voting request on the display unit 34 of the mobile terminal 3.

In FIG. 9A, "no-reply@abc.com", which is the email address of the vote management unit 432 of the server 4, is displayed as the sender. Also, "bbb@abc.com, ccc@abc.com...", which are the email addresses of the users who are to participate in the event, are displayed as the destinations. Furthermore, a message 900, i.e. "Voting period for the following candidate event venues is reached. Please log in from the following event URL and vote for ratings of the candidate event venues. URL<http://www.xxx.jp/1234.htm1>", is displayed.

When the user operates the operation unit 33, the display execution unit 351 of the mobile terminal 3 accesses the event URL, and transmits a login request including the user ID and a password to the server 4 via the terminal communication unit 31.

When the login request is acquired from the mobile terminal 3 via the server communication unit 41, the coordination unit 431 of the server 4 authenticates the acquired login request, and transmits information of a vote screen to the mobile terminal 3 via the server communication unit 41.

Returning to FIG. 5, when information of a vote screen is acquired from the server 4 via the terminal communication unit 31, the display execution unit 351 displays the vote screen on the display unit 34, and vote information is input by the user (step S107).

FIG. 9B is a diagram illustrating an example vote screen on the mobile terminal 3.

In FIG. 9B, the rating of the restaurant A, "Rating ●very good (3 pts) ○good (2 pts) ○OK (1 pt) ○not good (0 pts)" 910, the rating of the bar B, "Rating ○very good (3 pts) ●good (2 pts) ○OK (1 pt) ○not good (0 pts)" 911, and the rating of the karaoke C, "Rating ○very good (3 pts) ○good (2 pts) ●OK (1 pt) ○not good (0 pts)" 912, are displayed. A rating "●very good (3 pts)" is input for the restaurant A by operation of the operation unit 33 by the user. Also, a rating "●good (2 pts)" is input for the bar B by operation of the operation unit 33 by the user. Furthermore, a rating "●OK (1 pt)" is input for the karaoke C by operation of the operation unit 33 by the user.

Returning to FIG. 5, when the user presses a vote button 913, the display execution unit 351 transmits the input ratings 910 to 912 as vote information to the server 4 via the terminal communication unit 31 (step S108).

When the vote information is acquired from the mobile terminal 3 via the server communication unit 41, the vote management unit 432 of the server 4 stores the vote information in the server storage unit 42 in association with the user identification information of the user who has cast the votes (step S109).

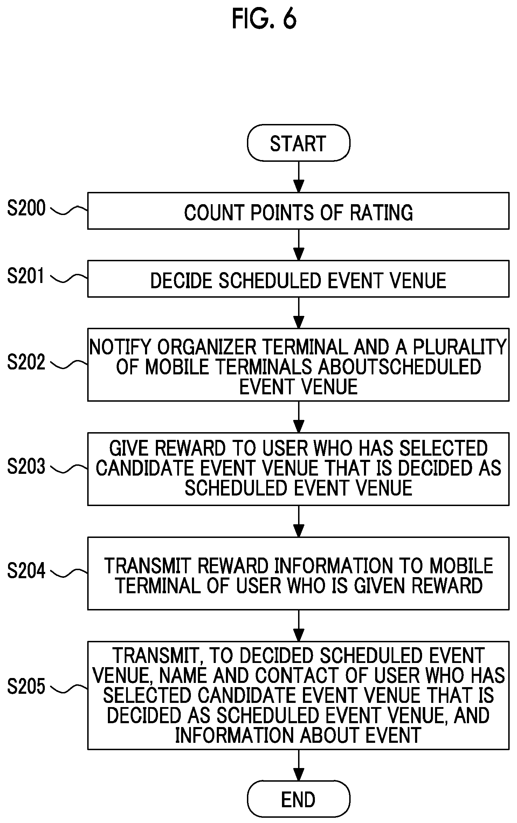

When the predetermined voting period for the candidate event venues is over, the coordination unit 431 of the server 4 carries out a scheduled event venue deciding process in FIG. 6 described later (step S110).

FIG. 6 is a diagram illustrating an example flow chart of a scheduled event venue deciding process by the server 4 based on counting of votes.

A scheduled event venue deciding process by the server 4 based on counting of votes is carried out after the predetermined voting period for the candidate event venues is over.

The vote management unit 432 of the server 4 counts the points of rating for the candidate event venues in the vote information stored in the server storage unit 42 (step S200).

The vote management unit 432 of the server 4 decides, based on the points of rating which have been counted, a candidate event venue with the highest counted points of rating, among a plurality of candidate event venues, as the scheduled event venue (step S201).

The vote management unit 432 of the server 4 notifies each of the organizer terminal 2 and a plurality of mobile terminals 3 that a scheduled event venue has been decided (step S202).

When notified about decision of a scheduled event venue by the server 4 via the terminal communication unit 31, the message management unit 352 of the mobile terminal 3 carries out display on the display unit 34 to the effect that a scheduled event venue has been decided.

FIG. 10A is a diagram illustrating an example screen displaying a notice to the effect that a scheduled event venue has been decided on the display unit 34 of the mobile terminal 3.

In FIG. 10A, "no-reply@abc.com", which is the email address of the vote management unit 432 of the server 4, is displayed as the sender. Also, "bbb@abc.com, ccc@abc.com...", which are the email addresses of users who are to participate in the event, are displayed as the destination. Furthermore, a message 1000, i.e. "Points of ratings by the vote have been counted and the following scheduled event venue has been decided. Karaoke C, 2014/12/22 18:30-, area: Shinjuku, number of persons: 3, URL<http://www.xxx.jp/1234.html>", is displayed. The message 100 indicates that the karaoke C has been decided as the scheduled event venue.

In the same manner, the vote management unit 432 of the server 4 transmits, also to the organizer terminal 2, the message to the effect that a scheduled event venue has been decided, which is the same message as that sent to the mobile terminal 3. Then, like the mobile terminal 3, the message management unit 252 of the organizer terminal 2 carries out display on the display unit 24 to the effect that a scheduled event venue has been decided.

Returning to FIG. 6, the reward management unit 433 of the server 4 stores reward information in the server storage unit 42 in association with the user identification information of a user who has selected the candidate event venue which has been decided as the scheduled event venue. The reward management unit 433 of the server 4 thereby gives a reward to the user who has selected the candidate event venue which has been decided as the scheduled event venue (step S203). The reward information is information about a reward such as points that can be used for payment at a venue. Alternatively, the reward information may be information about a reward such as a discount coupon, a gift in the form of goods, or the like.

The reward management unit 433 of the server 4 transmits, via the server communication unit 41, the reward information to the mobile terminal 3 of the user of the user identification information in association with which the reward information is stored (step S204).

When the reward information is acquired from the server 4 via the terminal communication unit 31, the message management unit 352 of the mobile terminal 3 displays the reward information on the display unit 34.

FIG. 10B is a diagram illustrating an example screen displaying the reward information on the display unit 34 of the mobile terminal 3.

In FIG. 10B, "no-reply@abc.com", which is the email address of the vote management unit 432 of the server 4, is displayed as the sender. Also, "bbb@abc.com", which is the email address of the user who has received the reward, is displayed as the destination. Furthermore, a message 1010, i.e. "The candidate event venue you added has been decided as the scheduled event venue. You will receive 100 points. Karaoke C, 2014/12/22 18:30-, area: Shinjuku, number of persons: 3, URL<http://www.xxx.jp/1234.html>", is displayed. The 100 points given as the reward may be used for payment at the venue, for example.

Returning to FIG. 6, the contact notification unit 434 of the server 4 is an example of contact notification means, and the name and the contact of the user who has selected the candidate event venue which has been decided as the scheduled event venue, and information about the event are transmitted to a terminal (not shown) of the decided scheduled event venue (step S205). A contact is information such as a telephone number, an email address, or an address. Information about an event is information about date/time of holding the event, the number of persons, and the like.

As described above, by providing an incentive or reward that will be given to a user who selects a candidate event venue which is finally decided as the scheduled event venue, it is possible to cause a user who is to participate in an event to become actively involved in selection of the candidate event venue.

### [Second Embodiment]

In the first embodiment, the predetermined selection period for a candidate event venue and the predetermined voting period for a candidate event venue may be made the same period, and the coordination unit 431 may transmit the candidate event venue addition request and the voting request for a candidate event venue to the mobile terminal 3 at the same time. In this case, after the mobile terminal 3 transmits vote information about a candidate event venue to the server 4, the mobile terminal 3 of another user possibly transmits the candidate event venue information about a candidate event venue selected by this other user to the server 4. Accordingly, when new candidate event venue information is received from the mobile terminal 3, the coordination unit 431 of the server 4 may transmit a revoting request to the mobile terminal 3 of the user who has already cast a vote.

Specifically, when candidate event venue information is received from the mobile terminal 3, the coordination unit 431 of the server 4 refers to the server storage unit 42, and determines whether or not there is a user who has already cast a vote. In the case where there is a user who has already cast a vote, the coordination unit 431 of the server 4 transmits a revoting request for candidate event venues, together with the candidate event venue information about the newly selected candidate event venue, to the mobile terminal 3 of the user who has already cast a vote, via the server communication unit 41.

When the revoting request is acquired via the terminal communication unit 31, the message management unit 352 of the mobile terminal 3 displays the revoting request on the display unit 34.

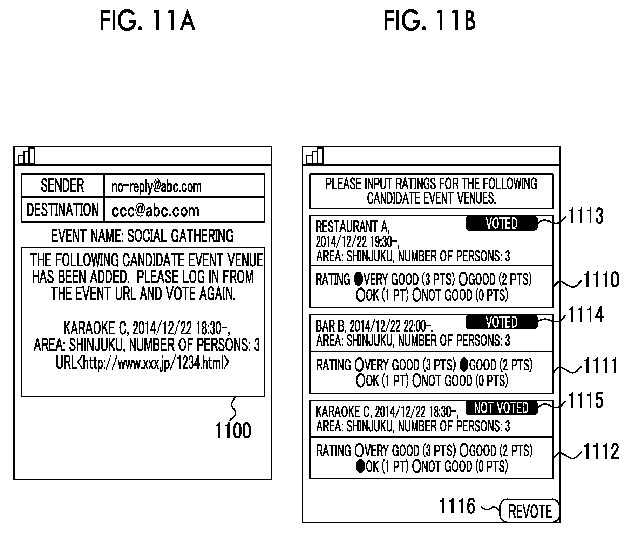

FIG. 11A is a diagram illustrating an example screen displaying the revoting request on the display unit 34 of the mobile terminal 3.

In FIG. 11A, "no-reply@abc.com", which is the email address of the vote management unit 432 of the server 4, is displayed as the sender. Also, "ccc@abc.com", which is the email address of a user who has already cast a vote, is displayed as the destination. Furthermore, a message 1100, i.e. "The following candidate event venue has been added. Please log in from the event URL and vote again. Karaoke C, 2014/12/22 18:30-, area: Shinjuku, number of persons: 3, URL<http://www.xxx.jp/1234.html>", is displayed.

When the user operates the operation unit 33, the display execution unit 351 of the mobile terminal 3 accesses the event URL, and transmits a login request including the user ID and a password to the server 4 via the terminal communication unit 31.

When the login request is acquired from the mobile terminal 3 via the server communication unit 41, the coordination unit 431 of the server 4 authenticates the acquired login request, and transmits information of a revote screen to the mobile terminal 3 via the server communication unit 41.

When the information about a revote screen is acquired from the server 4 via the terminal communication unit 31, the display execution unit 351 displays the revote screen on the display unit 34, and revote information is input to the revote screen by the user.

FIG. 11B is a diagram illustrating an example revote screen on the mobile terminal 3.

In FIG. 11B, the rating of the restaurant A, "Rating ●very good (3 pts) ○good (2 pts) ○OK (1 pt) ○not good (0 pts)" 1110, the rating of the bar B, "Rating ○very good (3 pts) ●good (2 pts) ○OK (1 pt) ○not good (0 pts)" 1111, and the rating of the karaoke C, "Rating ○very good (3 pts) ○good (2 pts) ●OK (1 pt) ○not good (0 pts)" 1112, are displayed. Furthermore, in FIG. 11B, a voted mark 1113 indicating that a vote has been cast for the restaurant A, a voted mark 1114 indicating that a vote has been cast for the bar B, and a "not voted" mark 1115 indicating the a vote is not yet cast for the karaoke C are displayed. A rating "●very good (3 pts)" is input for the restaurant A by operation of the operation unit 33 by the user. Also, a rating "●good (2 pts)" is input for the bar B by operation of the operation unit 33 by the user. Furthermore, a rating "●OK (1 pt)" is input for the karaoke C by operation of the operation unit 33 by the user. The user may change the ratings for the restaurant A and the bar B, for which votes have already been cast, by operating the operation unit 33.

When the user presses a revote button 1116, the display execution unit 351 transmits the input ratings 1110 to 1112, as the revote information, to the server 4 via the terminal communication unit 31.

When the revote information is acquired from the mobile terminal 3 via the server communication unit 41, the vote management unit 432 of the server 4 stores the revote information in the server storage unit 42 in association with the identification information of the user who has revoted. Here, the vote management unit 432 of the server 4 updates the vote information about the same subject as that of the revote information stored in the server storage unit 42 to the revote information.

Furthermore, when vote information or revote information is received from the mobile terminal 3 via the server communication unit 41, the vote management unit 432 of the server 4 may transmit the ongoing counting of the points of ratings by the voting regarding the candidate event venues to the organizer terminal 2 or the mobile terminal 3. This may motivate a user to select a new candidate event venue in a case where the counted points of ratings by the voting regarding the candidate event venue that the user has selected is low compared to that of other candidate event venues.

### [Other Embodiments]

Additionally, in the first and the second embodiments, the coordination unit 431 uses an email address as an example of identification information of a user. However, the coordination unit 431 may use another user ID as the identification information of a user, instead of an email address.

Also, in the first and the second embodiments, the reward management unit 433 gives a reward according to predetermined reward information to a user who has selected a candidate event venue which is decided as the scheduled event venue. The reward management unit 433 may vary the reward information of the reward to be given to the user who has selected the candidate event venue which is decided as the scheduled event venue, based on the counted points of ratings of the scheduled event venue. For example, the reward management unit 433 may give the user who has selected the candidate event venue which is decided as the scheduled event venue, points that are greater than the counted points of ratings of the scheduled event venue by predetermined times (for example, 100 times). Accordingly, the reward management unit 433 may vary the reward information in such a way that the reward information of a reward to be given to a user who has selected the candidate event venue which is decided as the scheduled event venue becomes better as the counted points of ratings of the scheduled event venue is greater. A user is thereby motivated to select a candidate event venue which possibly gets good ratings.

Furthermore, in the first embodiment, the operation sequence for selection of a candidate event venue and voting for a candidate event venue (steps S102 to S109 in FIG. 5) by the scheduled event venue deciding system 1 is carried out with respect to the mobile terminal 3 of a user who is to participate in an event. However, the operation sequence for selection of a candidate event venue and voting for a candidate event venue (steps S102 to S109 in FIG. 5) by the scheduled event venue deciding system 1 may be carried out with respect to the organizer terminal 2 of the organizer of the event. In this case, when the candidate event venue selected by the organizer is decided as the scheduled event venue, the reward management unit 433 of the server 4 gives a reward to the organizer, and the contact notification unit 434 of the server 4 transmits the name and the contact of the organizer and information about the event to the terminal (not shown) of the decided scheduled event venue. In the same manner, also in the second embodiment, the operation sequence for selection of a candidate event venue and voting for a candidate event venue by the scheduled event venue deciding system 1 may be carried out with respect to the organizer terminal 2 of the organizer of the event. In this case, the coordination unit 431 of the server 4 transmits a candidate event venue addition request and a voting request for a candidate event venue to the organizer terminal 2 at the same time.

Furthermore, in the first and the second embodiments, no upper limit is set for the number of candidate event venues that the organizer or a user who is to participate in the event is allowed to select. However, an upper limit may be set for the number of candidate event venues that the organizer or a user who is to participate in the event is allowed to select. In this case, first, the coordination unit 431 acquires the candidate event venue information about a selected candidate event venue from the mobile terminal 3 via the server communication unit 41. Then, the coordination unit 431 determines whether the number of candidate event venues selected, which is stored in the candidate event venue management table, is the upper limit or not, and in the case the number is the upper limit, an error message (not shown) is returned to the mobile terminal 3.

Furthermore, in the first and the second embodiments, no upper limit is set for the total of the number of candidate event venues that the organizer or all the users who are to participate in the event are allowed to select. However, an upper limit may be set for the total of the number of candidate event venues that the organizer or all the users who are to participate in the event are allowed to select. In this case, first, the coordination unit 431 acquires the candidate event venue information about a selected candidate event venue from the mobile terminal 3 via the server communication unit 41. Then, the coordination unit 431 determines whether the total of the number of candidate event venues selected, which is stored in the candidate event venue management table, is the upper limit or not, and in the case the number is the upper limit, an error message (not shown) is returned to the mobile terminal 3.

Furthermore, in the first and the second embodiments, the order of genres of candidate event venues that can be selected may be stored in the event management table in association with the event IDs. For example, "restaurant -> bar" as an example of the order of genres of candidate event venues that can be selected indicates that the main party of the event is to be held at a restaurant and the after-party is to be held at a bar. In this case, if candidate event venue information about selection of a candidate event venue which is not in accordance with the order of genres of candidate event venues that can be selected is acquired from the mobile terminal 3, the coordination unit 431 returns an error message (not shown) to the mobile terminal 3.

In the second embodiment, the coordination unit 431 transmits a candidate event venue addition request and a voting request for a candidate event venue to the mobile terminal 3 at the same time. However, the coordination unit 431 may alternatively transmit the candidate event venue addition request to only the mobile terminal 3 of a user who has voted for a candidate event venue.

A computer program for causing a computer to achieve each function of the terminal processing unit 25, the terminal processing unit 35, and the server processing unit 43 may be provided in a form of a computer-readable recording medium, such as a magnetic recording medium and an optical recording medium, in which the computer programs are recorded.

It should be understood that a person ordinarily skilled in the art may alter, replace, or modify the present invention without departing from the spirit and scope of the present invention, and that the embodiments may be combined as needed.

## Claims

1. A scheduled event venue deciding method implemented by a server (4) that includes storage means (42) for storing user identification information and that is capable of communicating with an organizer terminal (2) of an organizer of an event and participant terminals (3) of a plurality of participants who are to participate in the event, the method being **characterized by** comprising the steps of:
transmitting, according to upcoming event information from the organizer terminal (2), a candidate event venue addition request to the participant terminals (3) (S102);
acquiring, from the organizer terminal (2) or at least one of the participant terminals (3), candidate event venue information about a selected candidate event venue, and storing the candidate event venue information in the storage means (42) in association with user identification information of a user of the organizer terminal (2) or the participant terminal (3) who has selected the candidate event venue (S105);
transmitting the candidate event venue information and a voting request to at least the organizer terminal (2) or the participant terminals (3) (S106);
acquiring vote information from at least the organizer terminal (2) or the participant terminals (3), and deciding one of selected candidate event venues as a scheduled event venue based on the vote information (S201); and
storing reward information in the storage means (42) in association with user identification information of a user who has selected a candidate event venue that is decided as the scheduled event venue (S203).

2. The scheduled event venue deciding method according to claim 1, wherein an upper limit is set to the number of candidate event venues that a user of the organizer terminal (2) or one of the participant terminals (3) is allowed to select.

3. The scheduled event venue deciding method according to claim 1 or 2, wherein an upper limit is set to a total of the number of candidate event venues that users of all of the organizer terminal (2) and the participant terminals (3) are allowed to select.

4. The scheduled event venue deciding method according to any one of claims 1 to 3, further comprising a step of transmitting the candidate event venue addition request to only a participant terminal (3) from which the vote information has been acquired.

5. The scheduled event venue deciding method according to any one of claims 1 to 4, further comprising a step of notifying a terminal of the scheduled event venue about a contact of the user who has selected the candidate event venue that is decided as the scheduled event venue (S205).

6. The scheduled event venue deciding method according to any one of claims 1 to 5, further comprising the steps of:
varying the reward information based on the vote information; and
storing the reward information that has been varied in the storage means (42) in association with the user identification information of the user who has selected the candidate event venue that is decided as the scheduled event venue.

7. A server (4) that is capable of communicating with an organizer terminal (2) of an organizer of an event and participant terminals (3) of a plurality of participants who are to participate in the event, the server (4) being **characterized by** comprising:
communication means (41) for carrying out communication with the organizer terminal (2) or the participant terminals (3), the communication means including a communication interface circuit for transmitting/receiving data;
processing means (43) for integrally controlling the overall operation of the server (4); and
storage means (42) for storing data used for processing in the processing means (43), the storage means (42) storing user identification information,
wherein
the processing means (43) transmits, according to upcoming event information from the organizer terminal (2), a candidate event venue addition request to the participant terminals (3) via the communication means (41),
the processing means (43) acquires, from the organizer terminal (2) or at least one of the participant terminals (3) via the communication means (41), candidate event venue information about a selected candidate event venue, and stores the candidate event venue information in the storage means (42) in association with user identification information of a user of the organizer terminal (2) or the participant terminal (3) who has selected the candidate event venue,
the processing means (43) transmits the candidate event venue information and a voting request to at least the organizer terminal (2) or the participant terminals (3) via the communication means (41),
the processing means (43) acquires vote information from at least the organizer terminal (2) or the participant terminals (3), and decides one of selected candidate event venues as a scheduled event venue based on the vote information, and
the processing means (43) stores reward information in the storage means (42) in association with user identification information of a user who has selected a candidate event venue that is decided as the scheduled event venue.

8. The server (4) according to claim 7, wherein the processing means (43) comprises:
coordination means (431) for coordinating, between the organizer terminal (2)/participant terminals (3) and the server (4), which venue of a plurality of venues is to be selected by users as a candidate event venue, and what ratings, about a selected candidate event venue, the users are to vote for;
vote management means (432) for acquiring vote information about a plurality of candidate event venues from at least the organizer terminal (2) or the participant terminals (3), and for deciding a scheduled event venue from the plurality of candidate event venues based on a result of counting the vote information;
reward management means (433) for giving a predetermined reward to a user who has selected a candidate event venue that is decided as the scheduled event venue; and
contact notification means (434) for transmitting information about the user who has selected the candidate event venue that is decided as the scheduled event venue and information about the event to a terminal of the decided scheduled event venue.

9. The server (4) according to claim 7 or 8, wherein an upper limit is set to the number of candidate event venues that a user of the organizer terminal (2) or one of the participant terminals (3) is allowed to select.

10. The server (4) according to any one of claims 7 to 9, wherein an upper limit is set to a total of the number of candidate event venues that users of all of the organizer terminal (2) and the participant terminals (3) are allowed to select.

11. The server (4) according to any one of claims 7 to 10, wherein the processing means (43) transmits, via the communication means (41), the candidate event venue addition request to only a participant terminal (3) from which the vote information has been acquired.

12. The server (4) according to any one of claims 7 to 11, wherein the processing means (43) notifies a terminal of the scheduled event venue about a contact of the user who has selected the candidate event venue that is decided as the scheduled event venue.

13. The server (4) according to any one of claims 7 to 12, wherein the processing means (43)
varies the reward information based on the vote information, and
stores the reward information that has been varied in the storage means (42) in association with the user identification information of the user who has selected the candidate event venue that is decided as the scheduled event venue.
